# EUROPEAN PATENT APPLICATION

(11) **EP 2 746 028 A1**
(43) Date of publication of application: **25.06.2014**
(21) Application number: 12197860.5
(22) Date of filing: 18.12.2012
(51) Int. Cl.: B29C 47/02, B29C 47/88, B29C 47/20, B29L 23/00, B29C 47/06

(54) **Apparatus and method for coating a pipe with extruded polymer**

(71) Applicant: Wellstream International Limited, Tyne and Wear NE6 3PF (GB)
(72) Inventor: Leyland, Jonathan David, Newcastle-upon-Tyne, Tyne and Wear NE6 3PF (GB)
(74) Representative: Secerna LLP

(57) **Abstract**

A method and apparatus are disclosed for extruding a polymer layer (335). The apparatus includes an extruder head (300) comprising at least one outlet (340) for extruding polymer over an underlying substrate layer (325) and at least one support surface region (350) that supports polymer along a respective transport path portion (l) of a transport path extending from the outlet (340) to the underlying substrate layer (325).

## Description

The present invention relates to a method and apparatus for manufacturing flexible pipes. In particular, but not exclusively, the present invention relates to a method and apparatus for extruding a polymer layer of a flexible pipe in a way that minimises a risk of undesired ingress of the extruded material into inset regions of an underlying or overlying layer.

Traditionally flexible pipe has been utilised to transport production fluids, such as oil and/or gas and/or water from one location to another. Flexible pipe has been found to be useful in connecting a sub-sea location to a sea-level location. Flexible pipe has generally been formed as an assembly of flexible pipe body and one or more end fittings. The pipe body is conventionally formed as a combination of layered materials that form a pressure-containing conduit. The pipe structure allows large deflections in use without causing bending stresses that impair the pipe's functionality over its lifetime. The pipe body is generally built up as a combined structure including tubular metallic and polymer layers which are typically unbonded.

Such unbonded flexible pipes have been used for deep water (less than 3300 feet (1005.84 metres)) and ultra-deep water (greater than 3300 feet (1005.84 metres)) developments. Of course flexible pipe may also be used for shallow water applications (for example, less than around 500 metres depth) or even for on-shore (overland) applications.

Flexible pipes often incorporate one or more polymer layers, such as PVDF (polyvinylidene fluoride) that may be formed by extrusion. Most polymers have a certain maximum allowable strain above which the risk of damage to the material is much greater. In flexible pipes where a polymer layer lies adjacent an armour layer (such as a polymer barrier layer located adjacent a metallic pressure armour layer), the polymer layer may be subjected to quite severe non-uniform, highly localised strain. This is because there is often an adjacent armour layer formed from interlocking wires of certain cross-section and having gaps between adjacent windings. The polymer layer tends to deform and creep into those gaps when under pressure.

The application of internal pressure to the pipe (i.e. which can occur when an inner bore is pressurised) produces radial expansion in all layers and under such circumstances a polymer may undergo deformation and tend to creep into gaps of an overlying armour layer. At high pressures (for example, about around 8000 psi/55MPa or more), the resultant strain distribution within the polymer can be highly localised at the areas around the gaps and the polymer material may deform by cavitation rather than plastic flow. This can in turn result in the formation of micro-crazing or micro-cracking on the radially inner surface of the polymer layer. During any subsequent loading (such as the loading experienced during normal use in transporting production fluids) this micro-crazing may then extend to form longer/deeper cracks throughout the polymer layer. This increases the risk of failure of the polymer layer and may ultimately lead to loss of pressure containment having an adverse effect on the lifetime of a flexible pipe.

There is a drive, mainly due to the risk of multi-layer collapse in PVDF layer containing pipes to reduce the number of layers and also to reduce costs. This desire, for multi-layer designs, is driven by a need to protect a main barrier fluid sealing layer from any notching effects from ingress into the underlying or overlying layers which could cause sites for crack initiation.

It is an aim of the present invention to at least partly mitigate the above-mentioned problems.

It is an aim of certain embodiments of the present invention to provide a tooling design which allows solidification of a polymer melt to be controlled so as to wholly prevent or at least partially prevent any ingress of the extruded polymer layer into an underlying layer.

It is an aim of certain embodiments of the present invention to provide an apparatus and method for extruding a polymer layer.

It is an aim of certain embodiments of the present invention to enable a single layer or multi-layer of a PVDF extrusion or other such polymer extrusion to be free of any stress raisers which could potentially initiate notches leading to fatigue failure in service.

According to a first aspect of the present invention there is provided apparatus for extruding a polymer layer, comprising:
an extruder head comprising at least one outlet for extruding polymer over an underlying substrate layer; and
at least one support surface region that supports polymer along a respective transport path portion of a transport path extending from said outlet to the underlying substrate layer.

Aptly, the transport path portion comprises at least a portion of a drawdown cone region associated with the extruder head.

Aptly, the support surface region extends away from the extruder head in a direction of advancement associated with a motion of the underlying substrate layer.

Aptly, the apparatus further comprises:
the polymer is extruded at said outlet, having a pre-determined extrusion viscosity; and
a radially innermost region of the polymer contacts the underlying substrate at a touchdown location having a contact viscosity greater than a flow viscosity of a remainder of the polymer at the touchdown location.

Aptly, a contact viscosity of a region of the polymer that contacts the underlying substrate is equal to or greater than a pre-determined viscosity that prevents substantive ingress of polymer into any inset region of the substrate layer at an interface between the substrate layer and the polymer.

Aptly, the apparatus further comprises an intermediate body region, between the outlet and the underlying substrate layer, comprising the support surface region.

Aptly, the intermediate body region and a tip element of the extruder head are integrally formed.

Aptly, the apparatus further comprises an insert member comprising the intermediate body region located in an annular region between a radially innermost surface of a tip element of the extruder head and an outer surface of the underlying substrate layer.

Aptly, an outer surface of the intermediate body region has a stepped cross section and a plateau region of the cross section comprises the support surface region.

Aptly, an outer surface of the intermediate body region has a concave curved cross section that has a shape that matches a natural bellying shape adopted by extruded polymer.

Aptly, the intermediate body region comprises at least one fluid passageway in fluid communication with a source of cooling fluid.

Aptly, the polymer is PVDF.

Aptly, the support surface region is coated with a friction reducing material.

Aptly, the intermediate body region is manufactured from friction reducing material.

Aptly, the friction reducing material is PTFE or PEEK.

Aptly, the apparatus further includes a drive unit that rotates and/or oscillates the intermediate body region with respect to the substrate layer.

Aptly, the underlying substrate layer is a multi-layer unbonded flexible pipe body carcass layer.

According to a second aspect of the present invention there is provided a method of manufacturing flexible pipe body comprising at least one extruded polymer layer, the method comprising the steps of:
extruding polymer from an outlet of an extruder head over an underlying substrate layer; and
supporting polymer on a support surface region, along a respective transport path portion of a transport path extending from the outlet to the underlying substrate layer.

Aptly, the method further comprises cooling the polymer when it is supported on the support surface region.

Aptly, the method further comprises the step of providing a partial solidification region in a polymer transport path between the outlet and a contact point on the underlying substrate layer, said partial solidification region comprising a portion of a drawdown cone region associated with the extruder head.

Aptly, the method further comprises supporting the polymer via a support surface region of an intermediate body region located between the extruder head and the substrate layer.

Aptly, the method further comprises cooling the polymer to increase a viscosity of the polymer by flushing cooling fluid through at least one fluid passageway in the intermediate body region.

Aptly, the method further comprises cooling the polymer by blowing cooling gas on the polymer as it flows from the outlet to the underlying substrate.

Aptly, the method further comprises continually extruding polymer from the extruder head and continually transporting the underlying substrate layer in a direction of advancement away from the extruder head.

According to a third aspect of the present invention there is provided a method of manufacturing flexible pipe body comprising at least one extruded polymer layer, the method comprising the steps of:
extruding polymer having a pre-determined extrusion viscosity from an outlet of an extruder head; and
increasing the viscosity of the extruded polymer to a pre-determined contact viscosity prior to any contact between the polymer and an underlying substrate layer.

According to a fourth aspect of the present invention there is provided flexible pipe body, comprising:
a carcass layer; and
an extruded polymer layer over the carcass layer; wherein
there is substantially no ingress of polymer into any inset region of the carcass at an interface between the carcass and the polymer layer.

According to a fifth aspect of the present invention there is provided a flexible pipe comprising flexible pipe body and at least one end fitting.

According to a sixth aspect of the present invention there is provided apparatus constructed and arranged substantially as hereinbefore described with reference to the accompanying drawings.

According to a seventh aspect of the present invention there is provided a method substantially as hereinbefore described with reference to the accompanying drawings.

Certain embodiments of the present invention provide an extruder head which includes a support surface which allows additional cooling and/or cooling time to advance solidification of at least a region of extruded material during manufacture of a polymer layer. As a result a degree of stiffness is controlled to prevent the melt flow from any substantial ingress into an underlying or overlying inset regions. For example, ingress of extruded material can be wholly or at least partially avoided into the inset regions presented by a carcass profile of an underlying carcass layer as the polymer is forced from the extrusion head.

Certain embodiments of the present invention provide a mechanism by which cooling fluid such as water or air or the like can be made to flow close to where an extruder head extrudes polymer material. The cooling fluid can be utilised to cool the molten polymer at pre-determined locations to thereby control a viscosity of the material. By controlling viscosity, ingress of the polymer material into undesirable regions can be entirely avoided or at least substantially avoided. By cooling in selected regions around the extruder head region ingress into certain regions may optionally be permitted whilst denied in other regions.

Embodiments of the present invention will now be described hereinafter, by way of example only, with reference to the accompanying drawings in which:
Figure 1 illustrates flexible pipe body;
Figure 2 illustrates uses of a flexible pipe;
Figure 3 illustrates an extruder head;
Figure 4 illustrates an alternative body shape which can provide a support surface;
Figure 5 illustrates an alternative intermediate body shape; and
Figure 6 illustrates an alternative intermediate body shape.

In the drawings like reference numerals refer to like parts.

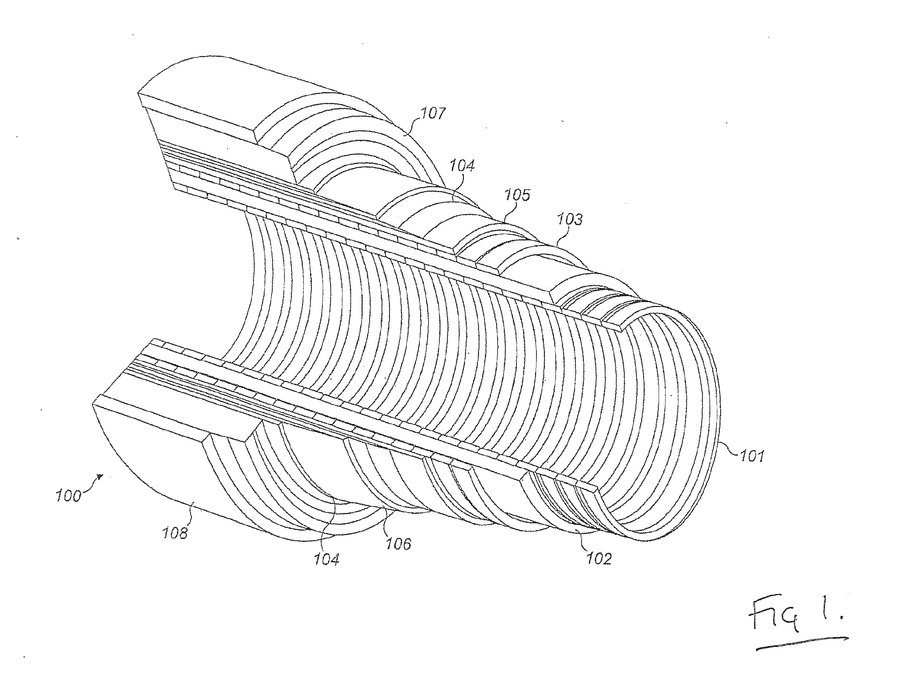

Throughout this description, reference will be made to a flexible pipe. It will be understood that a flexible pipe is an assembly of a portion of pipe body and one or more end fittings in each of which a respective end of the pipe body is terminated. Figure 1 illustrates how pipe body 100 is formed in accordance with an embodiment of the present invention from a combination of layered materials that form a pressure-containing conduit. Although a number of particular layers are illustrated in Figure 1, it is to be understood that the present invention is broadly applicable to coaxial pipe body structures including one or more layers manufactured from a variety of possible materials. It is to be further noted that the layer thicknesses are shown for illustrative purposes only.

As illustrated in Figure 1, a pipe body includes an optional innermost carcass layer 101. The carcass provides an interlocked construction that can be used as the innermost layer to prevent, totally or partially, collapse of an internal pressure sheath 102 due to pipe decompression, external pressure, and/or tensile armour pressure and mechanical crushing loads. It will be appreciated that certain embodiments of the present invention are applicable to 'smooth bore' operations (i.e. without a carcass) as well as such 'rough bore' applications (with a carcass).

The internal pressure sheath 102 acts as a fluid retaining layer and comprises a polymer layer than ensures internal fluid integrity. It is to be understood that this layer may itself comprise a number of sub-layers. It will be appreciated that when the optional carcass layer is utilised the internal pressure sheath is often referred to by those skilled in the art as a barrier layer. In operation without such a carcass (socalled smooth bore operation) the internal pressure sheath may be referred to as a liner.

An optional pressure armour layer 103 is a structural layer with elements having a lay angle close to 90 ° that increases the resistance of the flexible pipe to internal and external pressure and mechanical crushing loads. The layer also structurally supports the internal pressure sheath, and is typically f an interlocked construction.

The flexible pipe body also includes an optional first tensile armour layer 105 and optional second tensile armour layer 106. Each tensile armour layer is a structural layer with a lay angle typically between 10° and 55°. Each layer is used to sustain tensile loads and internal pressure. The tensile armour layers are often counter-wound in pairs.

The flexible pipe body shown also includes optional layers 104 of tape which each help contain underlying layers and may act as a sacrificial wear layer to help prevent abrasion between adjacent layers.

The flexible pipe body also typically includes optional layers of insulation 107 and an outer sheath 108, which comprises a polymer layer used to help protect the pipe against penetration of seawater and other external environments, corrosion, abrasion and mechanical damage.

Each flexible pipe comprises at least one portion, sometimes referred to as a segment or section of pipe body 100 together with an end fitting located at at least one end of the flexible pipe. An end fitting provides a mechanical device which forms the transition between the flexible pipe body and a connector. The different pipe layers as shown, for example, in Figure 1, are terminated in the end fitting in such a way as to transfer the load between the flexible pipe and the connector.

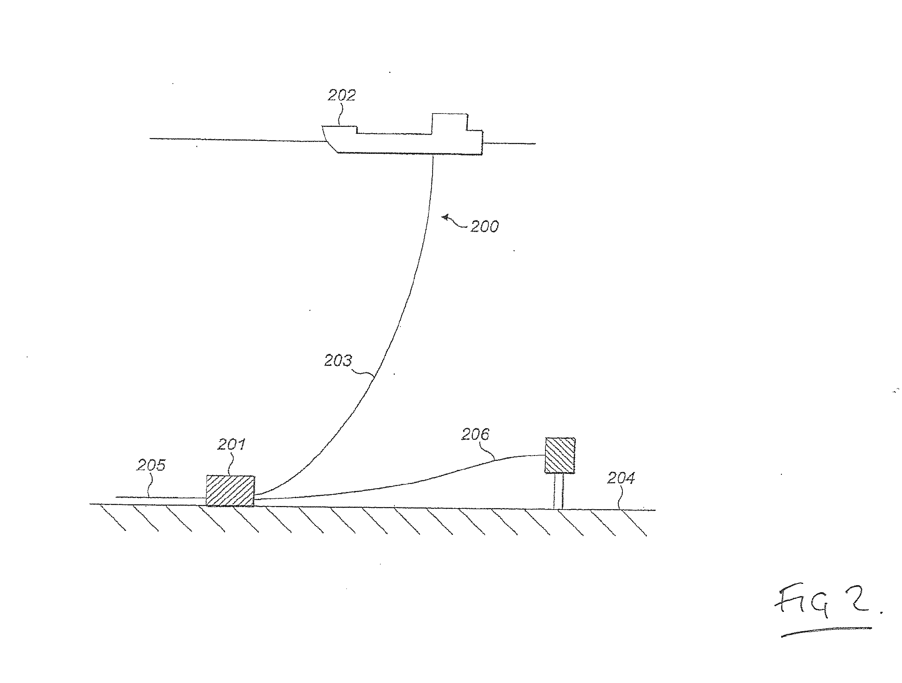

Figure 2 illustrates a riser assembly 200 suitable for transporting production fluid such as oil and/or gas and/or water from a sub-sea location 201 to a floating facility 202. For example, in Figure 2 the sub-sea location 201 includes an end of a sub-sea flow line. The flexible flow line 205 comprises a flexible pipe, wholly or in part, resting on the sea floor 204 or buried below the sea floor and used in a static application. The floating facility may be provided by a platform and/or buoy or, as illustrated in Figure 2, a ship. The riser assembly 200 is provided as a flexible riser, that is to say a flexible pipe 203 connecting the ship to the sea floor installation. The flexible pipe may be a single section or segments of flexible pipe body with end fittings connected end-to-end.

It will be appreciated that there are different types of riser, as is well-known by those skilled in the art. Embodiments of the present invention may be used with any type of riser, such as a freely suspended (free, catenary riser), a riser restrained to some extent (buoys, chains), totally restrained riser or enclosed in a tube (I or J tubes).

Figure 2 also helps illustrate how portions of flexible pipe can optionally be utilised as a flow line 205 or jumper 206.

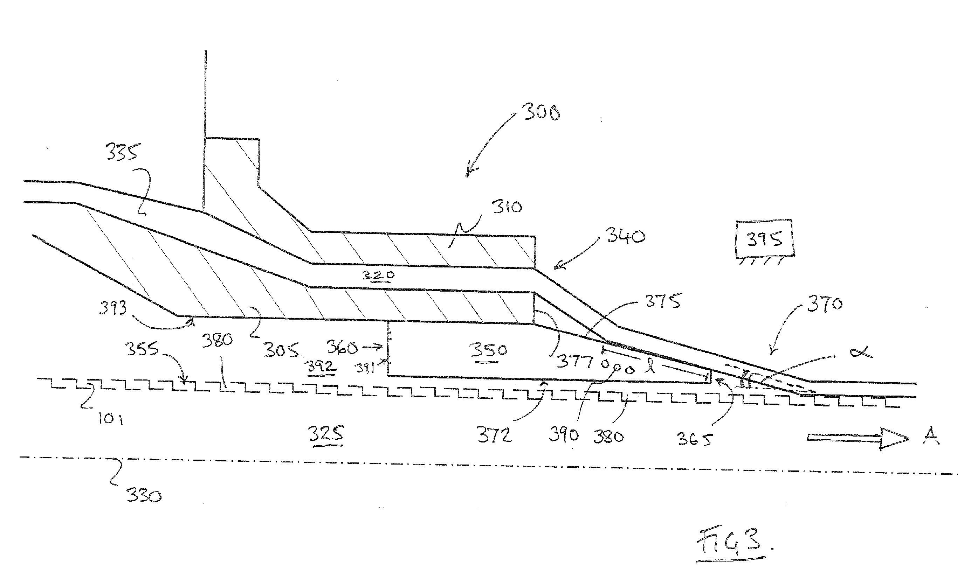

Figure 3 illustrates an extrusion head 300 which can be utilised to extrude a polymer layer in a tube-like configuration according to an embodiment of the present invention. Whilst reference is made hereinafter to the extrusion of an internal pressure sheath such as a barrier layer, it will be appreciated that certain embodiments of the present invention can be utilised to extrude any flexible body polymer layer. Furthermore, certain embodiments of the present invention are not restricted to the extrusion of polymer layers for multi-layer unbonded-type flexible pipes but rather may be utilised to extrude single layer pipe body.

It is likewise to be understood that certain embodiments of the present invention are broadly applicable in terms of the polymer to be extruded. For example, the polymer described with respect to Figure 3 is a PVDF material. However, certain embodiments of the present invention can be utilised to extrude layers of other polymer materials such as high density polyethylene (HDPE) or nylon 11 (PA11) or nylon 12 (PA12) or the like.

The extruder head 300 includes an extruder tip 305 and extruder die 310. The tip 305 and die 310 are spaced apart to define a polymer melt channel 320 therebetween. It will be appreciated that the extruder head is a generally annular device extending about a central bore 325. This central bore 325 ultimately defines an inner bore of a flexible pipe being manufactured and a central longitudinal axis 330 of that bore is illustrated in Figure 3. Also illustrated in Figure 3 is a carcass layer which is pre-formed prior to movement through the extruder group in a line layout. In the embodiment illustrated the extruder head is kept fixed in position and the carcass (underlying) layer fed through it. Alternatively, the extruder head 300 may of course be moved and the substrate kept fixed in position.

Polymer which is utilised to form the extruded layer is melted in an extruder mixing region and driven by a spiral mandrel in a direction from left to right in Figure 3. As a result, a polymer melt flow 335 flows along the melt channel 320. An exit orifice 340 is a substantially ring-shaped opening extending circumferentially around the flexible pipe being manufactured and from which molten polymer flows at a rate determined by the extrusion process settings.

The polymer melt flows out of the extruder head orifice 340 at a pre-determined rate and having a viscosity referred to as the extrusion viscosity.

As illustrated in Figure 3 an intermediate ring-like body 350 lies between the exit orifice 340 of the extruder head 300 and an outer surface 355 of the carcass layer 101. The intermediate body 350 shown in Figure 3 is a tooling insert which is secured to the tip 305 of the extruder head 300. It will be appreciated that according to certain other embodiments of the present invention the intermediate body 350 may be integrally formed as a region of the extruder tip 305. The intermediate body 350 is a substantially ring-like body extending circumferentially about the central bore 325 of the flexible pipe body being manufactured. The intermediate body 350 has an upstream end 360 and a downstream end 365 the latter of which is located very close to a touchdown region 370 where polymer flowing from the exit orifice 340 of the extruder head touches down on, and shrinks onto, the underlying carcass 101. The intermediate body 350 also includes a substantially smooth cylindrical inner surface 372 which remains spaced apart from the outer surface of the carcass layer 101. A smooth linear support surface 375 extends from the downstream end 365 of the intermediate body towards the extruder tip end 377. The support surface supports the polymer flowing from the exit orifice 340 of the extruder head for at least a part of the length of the support surface. A length of the region of the support surface which supports the flowing polymer is illustrated by the distance I in Figure 3.

The intermediate body 350 is thus juxtaposed between a location where the flow exits the extruder head and a location where the flow hits a substrate. As such a region of its surface causes the polymer melt to be delayed prior to touchdown on an outer surface of a carcass layer relative to a path which would otherwise be taken if the intermediate body were not present. More particularly, by travelling along the length I in contact with the support surface 375 at least a radially innermost part of the polymer flow is cooled relative to a temperature (and corresponding viscosity) at the exit orifice and to a radially outermost part of the polymer flow. As a result, when the polymer flow finally touches down on the outer surface 355 of the carcass layer 101, the radially innermost region of the polymer has a viscosity which is lower than a pre-determined viscosity selected so as to wholly or at least partially prevent ingress of the polymer into the inset regions 380 formed between adjacent windings in the carcass layer. Whilst Figure 3 illustrates how an extruded polymer can be extruded onto an underlying substrate layer, it will be appreciated that certain embodiments of the present invention can utilise a different configuration in which an additional or alternative support surface is located so as to cool one or more different zones of a polymer flow.

As illustrated in Figure 3 a transport path for extruded flowing polymer thus extends from the outlet 340 of an extruder head to a touchdown region 370 of an underlying substrate layer. The transport path shown in Figure 3 forms part of a drawdown cone and includes an initial substantially linear region in which the polymer flow extends at quite a steep angle towards the carcass layer and then turns to have a smaller angle of attack with respect to the carcass layer over a remainder of the transport path. Aptly, the angle of attack (alpha) made between the supported flow and the surface of the substrate is about around 50°. Aptly, the angle of attack is about around 15°- 30°. The support surface 375 of the intermediate body 350 has a region I that supports the polymer along a portion of the transport path. The support surface 375 and region of the support surface which supports the polymer extends away from the extruder head in a direction of advancement associated with motion of the carcass layer during manufacture of the flexible pipe. This direction of advancement is illustrated by arrow A in Figure 3.

As a result of the support surface region, the polymer is extruded at the outlet 340 having a pre-determined extrusion viscosity and then cooled prior to touchdown beyond a temperature which would otherwise be reached if the flow was transported directly from the orifice to the substrate. A radially innermost region of the polymer contacts the underlying carcass layer at a touchdown location 370 having a contact viscosity which is greater than a flow viscosity of a remainder of the polymer at that touchdown location. The contact viscosity where the polymer contacts the underlying substrate is equal to or greater than a pre-determined viscosity that is calculated to prevent substantive ingress of polymer into any inset region of the substrate at an interface between the substrate and the polymer. Aptly, the contact viscosity is between 5 X 10⁵ and 2 x 10⁶ PaS.

Aptly, the intermediate body 350 is manufactured from a material which has a low co-efficient of friction. Aptly, at least the support surface 375 of the intermediate body 350 is coated with a material having a low co-efficient of friction. For example, the body or coating is PEEK or PTFE or the like. This helps prevent the polymer extruded from the extruder exit orifice 340 from sticking to the support surface when it is supported away from contact with its target location prior to touchdown onto the outer surface of the carcass layer.

Aptly, one or more cooling channels (three shown in Figure 3) 390 are formed in the intermediate body and cooling fluid such as water or air from a suitable source (not shown) flows through these channels to continually cool the intermediate body 350. Aptly, the cooling channels are formed close to the support surface 375 where polymer is to be supported as it is transported between the exit orifice 340 and the touchdown region 370. The fluid source may be connected to the fluid channels 390 via a number of techniques. For example in the embodiment shown in Figure 3, through passageways leading to apertures 391 in the upstream end 360 of the intermediate body are provided with cooling fluid being injected into the annular region 392 between a radially inner surface 393 of the extruder tip 305 and the outer surface 355 of the carcass layer. Alternatively or additionally, cooling channels can link a cooling fluid source through the extruder tip 305. Aptly when the extruder tip 305 is integrally formed with the intermediate body 350 the channels are provided throughout the integral unitary body. Aptly, when the extruder tip 305 and intermediate body 350 are separate pieces channels in the extruder tip 350 are manufactured to align with corresponding channels in the intermediate body 350.

Aptly, a cooling fluid source 395 can additionally be utilised as a blower to continually blow cooling air on the polymer flow as it is transported from the exit orifice 340 of the extruder head 300 to the touchdown region 370. It will be appreciated that the blower 395 cools a radially outer region of the polymer flow rather than a region of the polymer flow close to the support surface 375. The net result of the support surface and/or blower is that a polymer flow can be extruded from the polymer head having a viscosity optimised for extrusion and then cooled at least partially, so that by the time the polymer makes contact at a touchdown region with a substrate layer, at least a region of the polymer which contacts the substrate layer has reached a viscosity, whereby ingress into inset regions in the substrate layer is wholly or partially avoided. Again this contact viscosity can be optimised according to need.

Aptly, the intermediate body and/or extruder tip may be rotated and/or oscillated during the extrusion process to help avoid polymer sticking to the support surface as the polymer is transported towards the substrate layer. The resultant shaking motion at the interface between the support surface and polymer helps reduce the risk of bonding. The oscillations may be slow such as at about 1 Hz or may be fast such as in the ultrasonic range, for example about 40,000 Hz depending on the melt material, the desired rate of cooling of the polymer, and the production speed. Rotation may also be aptly timed and aligned to more locally, perform spiral solidification of the melt at those regions of the polymer which will touch down around the gaps in the carcass and allow the material to span those gaps. The rotational speed of the intermediate body may be aptly in the range about 0.2 - 10 revolutions per second. For this the intermediate body may be helically grooved internally to promote the desired slightly faster cooling of the melt in a spiral.

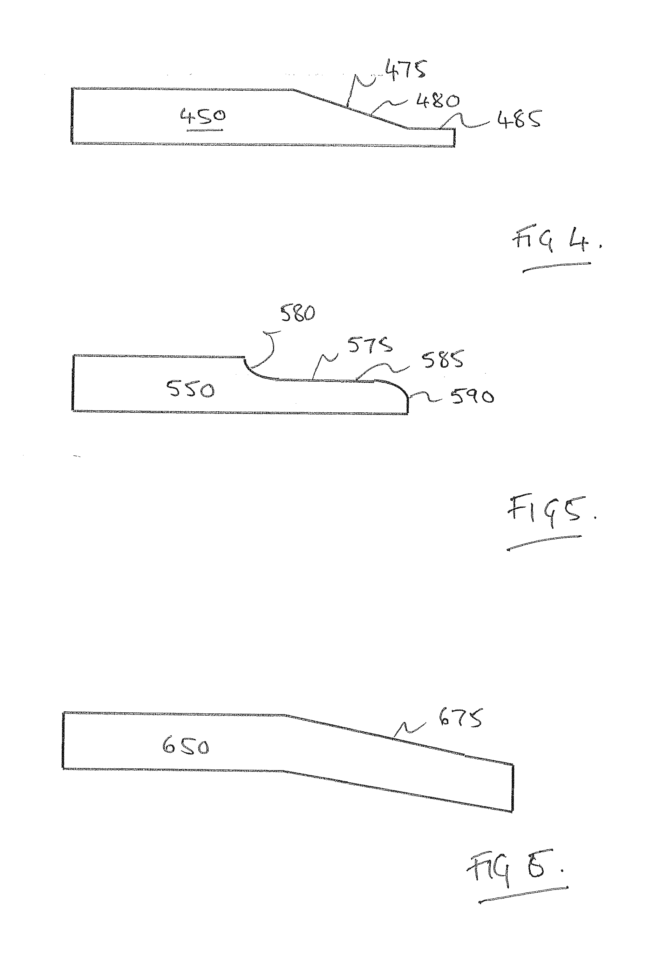

Figure 4 illustrates a cross-sectional shape of an intermediate body 450 according to an alternative embodiment of the present invention. In many respects, this intermediate body 450 is similar to the intermediate body 350 illustrated in Figure 3, however, the support surface 475 illustrated in Figure 4 is not a smooth linear frusto-conical shape as per Figure 3. Rather, the support surface 475 of the intermediate body 450 illustrated in Figure 4 has an initial smooth frusto-conical section 480 which extends from a region close to the extruder tip end 377 in use, away from the extruder head 300 into a region 485 which is smooth and has a substantially constant radius. In use, polymer flowing from the exit orifice 340 flows first along the inclined surface region 480 and then along the support surface portion 485 during which polymer flow is substantially aligned with the direction of advancement A of the underlying carcass 101. The support and surface shape allow stabilisation of the melt flow and sufficient duration for the desired surface viscosity increase of the melt flow.

Figure 5 illustrates an alternative embodiment of the intermediate body. The intermediate body 550 illustrated in Figure 5 has a support surface 575 which includes a curved concave region 580 which then extends into a substantially linear section 585 and then a substantially convex region 590 which in use will be close to the touchdown region 370. The radius of curvature of the concave section 580 and convex section 590 of the support surface 575 is selected so that polymer flowing from the extruder orifice 340 to the touchdown region 370 is supported with little resistance to flow.

Figure 6 illustrates an alternative intermediate body 650 which includes a support surface 675, much like the support surface 375 illustrated in Figure 3. However, the intermediate body 650 illustrated in Figure 6 provides an extended annular contact surface to promote surface cooling prior to touchdown onto the substrate.

The intermediate bodies illustrated in Figures 4, 5 and 6 may be separate pieces to the extruder tip or may be integrally formed therewith.

Certain embodiments of the present invention allow a more advanced solidification of a polymer melt to occur than is known with conventional techniques. This helps prevent any ingress of extruded polymer material into an underlying carcass or other such substrate layer due to an increased stiffness of the polymer because of increased time of contact with a cooled surface. This helps enable, for example, a single layer PVDF extrusion to be free of any stress raisers which could potentially initiate notches leading to fatigue failure in service.

Certain embodiments of the present invention provide an extension to a conventional transport path for polymer flow between an exit orifice of an extruder head and a touchdown point. This allows additional cooling and cooling time to advance the solidification of at least an inner surface of the extrusion to impart a level of stiffness to prevent the melt flow ingress into the carcass profile as the polymer is forced from the extrusion head and the polymer is pulled via a puller mechanism further along the line.

Aptly, the length and tip section can be cooled using water or air through internal channels and/or external blowers. The extended piece is aptly manufactured from or coated with a low friction material which itself is able to withstand the extrusion melt temperature of about around 200 to 300°c.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. Apparatus for extruding a polymer layer, comprising:
an extruder head comprising at least one outlet for extruding polymer over an underlying substrate layer; and
at least one support surface region that supports polymer along a respective transport path portion of a transport path extending from said outlet to the underlying substrate layer.

2. The apparatus as claimed in claim 1, further comprising:
the transport path portion comprises at least a portion of a drawdown cone region associated with the extruder head.

3. The apparatus as claimed in claim 1 or claim 2, further comprising:
the support surface region extends away from the extruder head in a direction of advancement associated with a motion of the underlying substrate layer.

4. The apparatus as claimed in any preceding claim, further comprising:
the polymer is extruded at said outlet, having a pre-determined extrusion viscosity; and
a radially innermost region of the polymer contacts the underlying substrate at a touchdown location having a contact viscosity greater than a flow viscosity of a remainder of the polymer at the touchdown location.

5. The apparatus as claimed in any preceding claim wherein a contact viscosity of a region of the polymer that contacts the underlying substrate is equal to or greater than a pre-determined viscosity that prevents substantive ingress of polymer into any inset region of the substrate layer at an interface between the substrate layer and the polymer.

6. The apparatus as claimed in any preceding claim, further comprising:
an intermediate body region, between the outlet and the underlying substrate layer, comprising the support surface region.

7. The apparatus as claimed in claim 6, further comprising:
the intermediate body region and a tip element of the extruder head are integrally formed.

8. The apparatus as claimed in claim 6, further comprising:
an insert member comprising the intermediate body region is located in an annular region between a radially innermost surface of a tip element of the extruder head and an outer surface of the underlying substrate layer.

9. The apparatus as claimed in any preceding claim wherein the underlying substrate layer is a multi-layer unbonded flexible pipe body carcass layer.

10. A method of manufacturing flexible pipe body comprising at least one extruded polymer layer, the method comprising the steps of:
extruding polymer from an outlet of an extruder head over an underlying substrate layer; and
supporting polymer on a support surface region, along a respective transport path portion of a transport path extending from the outlet to the underlying substrate layer.

11. The method as claimed in claim 10, further comprising the step of:
cooling the polymer when it is supported on the support surface region.

12. The method as claimed in claim 10, further comprising the steps of:
providing a partial solidification region in a polymer transport path between the outlet and a contact point on the underlying substrate layer, said partial solidification region comprising a portion of a drawdown cone region associated with the extruder head.

13. The method as claimed in claim 10, further comprising the step of:
supporting the polymer via a support surface region of an intermediate body region located between the extruder head and the substrate layer.

14. The method as claimed in any one of claims 10 to 13, further comprising the steps of:
continually extruding polymer from the extruder head and continually transporting the underlying substrate layer in a direction of advancement away from the extruder head.

15. A method of manufacturing flexible pipe body comprising at least one extruded polymer layer, the method comprising the steps of:
extruding polymer having a pre-determined extrusion viscosity from an outlet of an extruder head; and
increasing the viscosity of the extruded polymer to a pre-determined contact viscosity prior to any contact between the polymer and an underlying substrate layer.
